# EUROPEAN PATENT SPECIFICATION

(11) **EP 2 890 180 B1**
(45) Date of publication and mention of the grant of the patent: **14.09.2016**
(21) Application number: 13382559.6
(22) Date of filing: 27.12.2013
(51) Int. Cl.: H04W 28/02, H04W 48/18, H04W 8/00, H04W 12/06, H04W 36/22

(54) **Method for managing a network access user policy for offloading data traffic, using access network discovery and selection function**
Verfahren zur Verwaltung der Netzzugangsnutzerrichtlinien zur Abladung von Datenverkehr mit einer Netzwerkerkennungs- und Auswahlfunktion
Procédé de gestion d'une politique utilisateur d'accès au réseau pour le déchargement de trafic de données, au moyen de la fonction sélection et découverte de réseau d'accès

(43) Date of publication of application: 01.07.2015
(73) Proprietor: Telefonica S.A., 28013 Madrid (ES)
(72) Inventor: Matas Sanz, Primitivo, 28013 Madrid (ES); Florez Rodriguez, David, 28013 Madrid (ES)
(74) Representative: Carpintero Lopez, Francisco

(56) References cited:
- WO-A1-2012/142437
- WO-A1-2013/029672
- US-A1- 2013 265 879

## Description

### TECHNICAL FIELD OF THE INVENTION

Present invention generally relates to the management of access networks and more specifically to the access to Wi-Fi networks for offloading data traffic according to user owned policies in an access network discovery and selection function environment.

### BACKGROUND OF THE INVENTION

Nowadays, increasingly complex and all-pervasive, mobile networks are dominated by data flows. The recent explosion in data and signalling traffic is leading to the impression that the classic 3^{rd} Generation Partnership Project (3GPP) mobile network architecture cannot cope with this traffic surge, fostering the emerging concept of "offloading" low priority data traffic to other radio accesses (i.e. Wi-Fi, Wi-Max) than pure 3GPP, so both voice and data premium services can perform optimally, avoiding congestion of scarce resources. Consequently, Network Operators are deploying small Cells and Wi-Fi Access Points (AP) to facilitate the implementation of this concept. This equipment deployment is complemented by Network Operators with a number of already existing mechanisms and protocols used to perform Wi-Fi offloading. An example can be found in US2013/265879**.**

Most mobile terminals (User Equipment, UE) are endowed with capability of connecting to standard Wi-Fi APs, as well as selecting which one use among the available choices, based on pre-set or user defined preferences stored on the device. In order to offer Wi-Fi access as an integral part of its mobile solutions, a Network Operator needs to be able to install their own access/selection policies in the UE, and dynamically adapt them to environmental changes. To implement a solution to this problem, 3GPP developed the Access Network Discovery & Selection Function (ANDSF) standard suite (basically the technical specifications TS 23.402, TS 24.302 and TS 24.312).

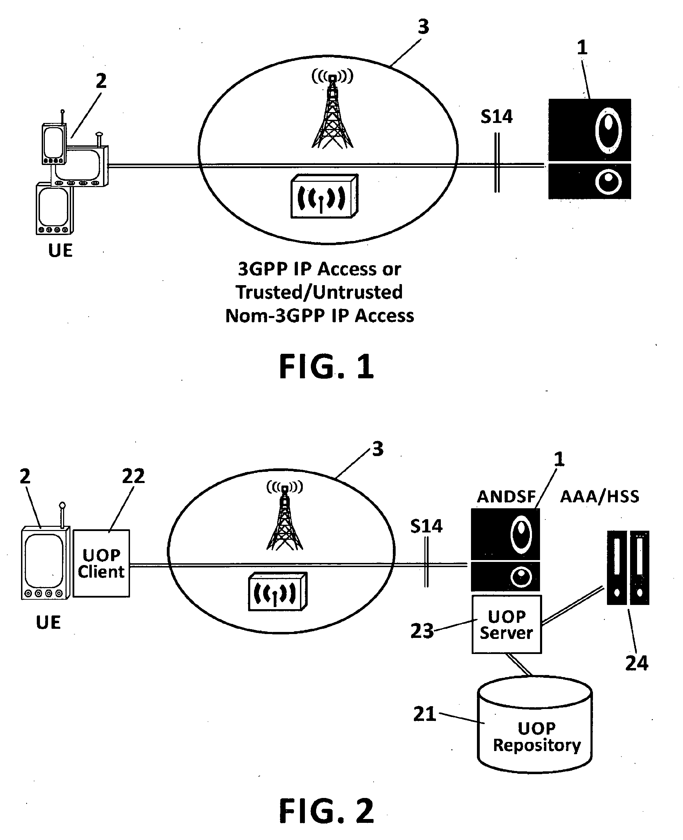

The ANDSF procedure supplies a UE with information about available access networks, recognised as such by a Network Operator, which provide connectivity in a certain geographical area, as well as validity conditions and priority rules to be applied when selecting between them. ANDSF is basically built around two basic entities shown in figure 1: an ANDSF server (1), located in the Operator Network, which stores the different policies regarding radio access (3GPP, Wi-Fi, Wi-Max); and an ANDSF client installed in the UE (2) that retrieves and applies the ANDSF policies, decides which network access would be best suited in each circumstance and sends event to the ANDSF server when an environment change takes place.

The connection between ANDSF client and server will be opened through any radio access available (3) at the moment, either 3GPP or non 3GPP, and in this last case, either if it trusted (known and managed by the Network Operator) or untrusted (neither known nor managed by the Network Operator).

By using ANDSF policy information, the UE can decide if, how and to what network access it should hand over part or all of its incoming/outgoing traffic. This decision process will be ruled by different criteria like for example availability and validity of network access, according, for instance, to location constrains or time/date ranges.

In order to apply the right set of policies for each user, the ANDSF server must obtain information about the UE's identity. This identity is not sent directly by the UE, but obtained from a third entity. The basic underlying concept is that prior to any dialogue between the UE and the ANDSF server, both must authenticate to each other in order to avoid impersonation security failures.

Prior art cover different works based on ANSDF, for example the patent application US20120122422 A1, *"ANDSF, Node Distributing Closed Subscriber Group (CSG) Information"* relates to a method in an ANDSF node for distributing close subscriber group information (i.e. available only to a restricted set of subscribers). Or the patent application WO2013029672 *"Optimizing ANDSF Information Provisioning For Multiple-Radio Terminals",* which is also based on the ANDSF standard and it relates to a new network device within a communication network for provisioning access network information to an UE. Another solution from prior art (WO2013029672) proposes a system for generating access network discovery information, ANDI, for transmission to a User Equipment, UE, of a network subscriber by an ANDSF. The document *"ANDSF Provisioning"* (US 2013/0165,131) discloses a provisioning UE in communication with an ANDSF server through an access network includes a network interface unit of the Provisioning User Equipment (PUE) from which a registration request is sent to the ANDSF server through the access network and which receives a successful authentication result and a set of configuration instructions from the ANDSF server. The document US2013754648 "Method and Apparatus for selecting wireless access using application identification information in wireless communication system" defines a method based on ANDSF so that a terminal can find an alternate radio access in case of primary access breakdown/downtime.

Nowadays, different competitors are working in products related to the ANDSF standard with a marked tendency on how to make aware the ANDSF server of the policies/configuration established by other existing network elements. The most extended new feature is the inclusion of a policy manager engine to allow flexible prioritization beyond standard, like the solution "In-touch Dynamics Offload" from the company "Greenpacket" or integrations with standard control elements in the Network Operator's side Interdigital "SmartANDSF", which as an additional feature includes specific triggers on the UE to initiate the discovery and selection function transparently, followed by a user transparent, zero click, authentication and login process.

It has to be mentioned the work in integrated environments with other entities related to management and policies enforcement inside the operator network, as offered by main equipment manufacturers like Ericsson, Nokia or Tekelec. They include Wi-Fi Gateways to manage Wi-Fi access points from inside the Core Operator Network and ANDSF server integrated into the network elements for access control (AAA server or HSS) and policy definition (PCRF).

As defined in 3GPP, the ANDSF standard defines a mechanism for instructing a UE about when, how and in which order, the UE can trigger an offloading process to an available network access. However, it also displays several important drawbacks. ANDSF is a solid first step for addressing the offload of 3GPP mobile traffic to Wi-Fi networks by means of propagating carrier policies to UEs, but it currently stops short of expectation due to ANDSF only allowing "static policies" and not addressing dynamic/real-time policies like those a PCRF server can provide.

ANDSF server uses the Trust and non-Trust concept but only stores and manages offloading policies referring to trusted Wi-Fis from the Network Operator's point of view. Thus, a user cannot define a personal set of policies or include as a network access choice the user' own trusted Wi-Fi APs (home/corporate Wifi or similar). Additionally, there are not any means of making the WiFi APs a user owns or knows appear in other users' ANDSF policies or inviting them to connect through them, even as guests.

ANDSF server is defined as an isolated element, without interfaces to other Network Elements. This makes it difficult for a network operator to apply specific policies per user according to user profiles (no connection to AAA/HSS or PCRFs) especially in response to changes in network conditions (most vendor solutions, as explained above, intend to address this problem. Besides, ANDSF policies are actually advisory, so a user can easily override them and revert to factory defaults/ user preferences.

The ANDSF standard does not consider the management of the required credentials to connect to the Wi-Fi AP while offloading, relying on pre-stored credential sets in the UE instead (e.g.. EAP). Since this information must be known beforehand, it can turn the offloading procedure in a cumbersome task, if the user wanders outside of its normal circuits or simply does not remember the credentials.

The End-user's involvement in ANDSF policy definition and management arises as one of the most important problems related to this technology. Basically ANDSF specifies a method to indicate to the user which reliable Wi-Fi access points (APs), from the Network Operator's point of view, are available throughout a certain area and when, how and why traffic should be offloaded to those Wi-Fi AP. However, it does not specify any procedure for involving the end user, apart from the final decision on allowing the offloading or not. Users are neither allowed to define their own policies based on reliable Wi-Fi Aps from user's point of view, like Wi-Fi access points at home or corporate environments. Normally, average users will spend most of their waking hours in those two types of locations, whose network accesses may be unknown for the Network Operator, and where the offloading process would be rather useful, because they are normally areas of low 3GPP coverage or prone to congestion. Therefore, ensuring user involvement seems to be crucial for ANDSF's success because if an improvement is not perceived in user experience, the user could simply disable the ANDSF offloading capability, jeopardising the resolution of congestion problems that are the main point of this standard.

In conclusion, none of the solutions from prior art allow defining any sort of end user owned policies, which surely would increase ANDSF's. user experience and satisfaction. Therefore, a good deal of enhancements to the ANDSF entities and protocols are required to address the possibility of a creating, managing and controlling personal offloading policies, which would entail an increase in user satisfaction and perceived Quality of Experience (QoE).

### SUMMARY OF THE INVENTION

Present invention solves the aforementioned problems fostering user involvement by allowing definition of personal offloading policies based on the network elements the user consider reliable, for example the Wi-Fi AP at home or those in corporate environments. Therefore, it is presented a method for managing, by a user, a network access user policy (UOP) associated to a user equipment (UE1) for offloading data traffic, using Access Network Discovery and Selection Function (ANDSF), wherein one or more Wi-Fi access points are available for the UE1, being the UE1 in communication with an server through a mobile communications network. The method comprises the steps of:
a) sending, from the UE1 to the server, through the mobile communications network, a first message containing an identifier of an available Wi-Fi access point;
b) the server receiving the first message and sending a second message to the UE1 requiring a trial offloading through the Wi-Fi access point;
c) if the trial offloading is successful, the UE1 sending, using the Wi-Fi access point, a third message containing certain parameters to the server for setting a UOP;
d) the server setting a UOP for offloading traffic according to the certain parameters;
e) the server storing the UOP in a UOP repository;
f) the server sending a fourth message containing the UOP to the UE1;
g) the user of UE1 managing the UOP taking at least one of the following actions: editing the UOP, applying the UOP, distributing the UOP or deleting the UOP.

Additionally, according to one particular embodiment, the step of editing the UOP may further comprise the steps of:
- sending a request message, from the UE1 to the server, containing a request to edit the UOP;
- the server receiving the edition message and sending to the UE1 another message containing the UOP;
- editing one or more parameters of the UOP in the UE1;
- sending an edition message containing the edited UOP from the UE1 to the server;
- the server storing the edited UOP in the UOP repository;
- the server sending an updating message containing the edited UOP to the UE1.

In one embodiment of the invention, applying the UOP through a determined Wi-Fi access point, may further comprise:
- the UE1 sending a request message to the server containing an identifier of the determined Wi-Fi access point;
- searching, by the server, in the UOP repository for a UOP associated to the identifier;
- if the UOP is found, sending a connection message from the server to the UE1 containing at least the UOP;
- the UE1 connecting to the Wi-Fi access point and offloading content according to the UOP.

Distributing the UOP to a second user equipment (UE2), according to one particular embodiment of the invention, may further comprise:
- sending a first invitation message, from the UE1 to the server, containing an identifier of the UE2 and indicating the UOP to be shared;
- the server sending a second invitation message to the UE2 for the UOP shared by UE1;
- the UE2 accepting the invitation for sharing the UOP;
- adding the UE2 to the UOP as an authorized user;
- the server storing the UOP in the UOP repository;
- the server sending an updating message containing the UOP to the UE2.

Optionally, an authorization step may be comprised by present invention, wherein the server sends to a network management element an authorization message containing at least one of: {the identifier of the Wi-Fi access point, a identifier of the user}, to check whether they are allowed/registered/authorized.

Some embodiments of the invention, wherein a Wi-Fi access point requires certain credentials, further comprises the UE1 providing said credentials as a parameter to include in the UOP associated.

A UOP may comprise, according to one embodiment of the invention, information from the following list: list of users allowed to access and manage the UOP, credentials to be used for accessing the UOP, type of operation allowed for each user, identifier of a WI-Fi access point, credentials required to connect to the WI-Fi access point, geographical location and time/date ranges defining a validity for the UOP.

One embodiment of the invention regards to deciding, the UE1, how and to what network access hand over part or all of incoming/outgoing traffic of UE1 according to the UOP. This decision process may be ruled by different criteria from the following list:
- Availability and validity of the network access, according, for instance, to location constrains or time/date ranges.
- Priority of the network access in a rule list.
- If handover has to be carried out for all the traffic or only for specific flows. In this case, the involved flows have to be characterized along with the list of permitted network access for that flow, which may or may not match the network access list for a different one.
- If handover has to be carried out for all Access Point Names (APNs) or only for specific ones among those concurrently used by the UE1.
- Internal conditions/events in the UE1.
- Characteristics of the network access, e.g. connection data, connection technology.

The identifier used for the Wi-Fi access points in the UOP may be the SSID, the HESSID or a BSSID.

A Wi-Fi access point may support more than one identifier. According to some particular embodiments, the invention may further comprise the step of setting one UOP for each identifier of the Wi-Fi access point with one or more parameters from the following list: desired QoS, bandwidth ceiling, available operator services, and network visibility.

A second aspect of the invention refers to a system for managing, by a user, a network access user policy (UOP) associated to a user equipment (UE1) for offloading data traffic, using Access Network Discovery and Selection Function (ANDSF), wherein one or more Wi-Fi access points are available for the UE1, being - the UE1 in communication with a server through a mobile communications network. The system comprises:
- the UE1 configured for: sending, through the mobile communications network, messages containing identifiers of available Wi-Fi access points; sending, using the Wi-Fi access point, messages containing certain parameters to the server for managing UOPs taking at least one of the following actions: applying the UOP, editing the UOP, deleting the UOP, or distributing the UOP;
- a server configured for: receiving messages from the UE1 and sending messages to the UE1 requiring a trial offloading through Wi-Fi access points; applying, editing, deleting and distributing UOPs for offloading traffic according to the certain parameters; and sending messages, containing UOPs, to the UE1;
- an UOP repository, in communication with the server, for storing UOPs.

According to one embodiment of the invention, the UE1 may be further configured for sending a request message to the server, containing a request to edit the UOP; editing one or more parameters of the UOP; and sending an edition message containing the edited UOP to the server; and the server may be further configured for receiving edition messages and sending to the UE1 messages containing UOPs; and sending updating messages containing edited UOPs to the UE1.

The system of the invention, according to some particular embodiments, may comprise:
- the UE1 further configured for: sending a request message to the server containing an identifier of the determined Wi-Fi access point; and connecting to the Wi-Fi access point for offloading content through the Wi-Fi access point according to the UOP;
- the server further configured for: searching in the UOP repository for a UOP associated to the identifier; and sending connection messages to the UE1 containing at least the UOP.

The system of the invention, according to some particular embodiments wherein a second user equipment (UE2) is comprised, may be further configured for accepting invitations for sharing UOPs and wherein:
- the UE1 is further configured for: sending invitation messages to the server, containing an identifier of the UE2 and indicating the UOP to be shared
- the server is further configured for: sending invitation messages to the UE2 for UOPs shared by UE1; adding the UE2 to the UOP as an authorized user; and sending updating messages containing UOPs to the UE2;

The system of the invention, according to some particular embodiments, wherein the server is further configured for sending to a core network an authorization message containing at least one of: {the identifier of the Wi-Fi access point, a identifier of the user equipment}, may further comprise an authorization server in the core network, in communication with the server, configured for checking whether the Wi-Fi access point and the user equipment are allowed/registered/authorized.

In one embodiment of the invention the server is a ANDSF server.

A last aspect of the invention refers to a computer program product comprising computer program code adapted to perform the method of the invention when said program code is executed on a computer, a digital signal processor, a field-programmable gate array, an application-specific integrated circuit, a micro-processor, a micro-controller, or any other form of programmable hardware.

By adding the system and method proposed by present invention, the users are involved in the ANDSF policy definition and can specify their own settings, even including as a valid Wi-Fi AP those they trust regardless of their being known or not by the Network Operator. The process is thus friendlier, increasing flexibility and end user's confidence.
From a user's point of view, the following advantages can be highlighted:
- Allow the creation of UOP for user's trusted Wi-Fi AP (i.e home Wi-fi, corporate environment...).
- Wi-Fi AP credentials are not stored in the UE but in the cloud, enabling accessing to that Wi-Fi AP from other devices, without the user having to configure them.
- User control of access settings (Wi-Fi ID, credential, validity conditions), with network operator in charge of access validation and cloud storage.
- Allow definition of user groups for granting access to home Wi-Fi environments.
- Allow definition of user lists for globally and uniquely managing guest access to multiuser Wi-Fi environments (corporate or controlled area).
- If Wi-Fi AP is endowed with multiple SSID capabilities, the owner can open one of them for external sharing (club WIFI, Phonera...) and distribute credentials/configurations to friends (home Wi-Fi) or guests users (in corporate environments).
- The transfer of connection parameters and security credentials is carried out by means of the ANDSF Standard (OMA).

From Network Operator's point of view:
- Increase the number of offloading network possibilities, enabling the inclusion of Wi-Fi APs not known to the Network Operator. The offloading will thus be facilitated in home and corporate environments with reduced 3GPP coverage and/or congestion risk, and usually served by Wi-Fi APs not controlled by the operator, thus improving network flexibility for a user's optimal offloading experience.
- Allow QoS control by making Network Operator Gateways aware of previously unknown Wi-Fi APs.
- Facilitates Operator Services' discovery and access.
- Improve user experience and loyalty (private policies are stored in the Network Operator Storage).
- Integrated with ANDSF standard.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
**Figure 1****.-** shows a basic scheme of a ANDSF architecture.
**Figure 2****.-** shows a policy setting and distribution in an ANDSF environment according to one embodiment of the invention.
**Figure 3****.-** shows a policy creation flow according to one embodiment of the invention.
**Figure 4****.-** shows a policy application flow according to one embodiment of the invention.
**Figure 5****.-** shows a policy edition flow according to one embodiment of the invention.
**Figure 6****.-** shows a policy sharing flow according to one embodiment of the invention.
**Figure 7****.-** shows a diagram of one embodiment of the invention sharing surplus bandwidth.
**Figure 8****.-** shows a particular embodiment of the invention using ANDSF as Wi-Fi AP auto-configuration tool in a service environment.

### DETAILED DESCRIPTION OF THE INVENTION

The invention describes a process for, in general terms, setting, verifying and distributing User Owned Policies (UOP) in an ANDSF environment.

Figure 2 illustrates one embodiment of the invention where it is comprised a UOP repository (21) deployed within (or remotely according to other embodiments), an ANDSF server (1), to store a user's offloading policies entries, which dialogues with an UE (2). Those elements are enhanced by adding an UOP Client (22) to the UE, an UOP server (23) to the ANDSF server, and an external UOP repository (21) for UOP storage.

Each UOP entry may consist of: a) List of users allowed access to the UOP entry plus allowed operations (i.e. lookup total control) along with (optionally) their UOP management credentials; b) the identifier of Access Network, usually a Wi-Fi AP, which will be used as a main example in the following explanation; c) credentials required for connection to the Wi-Fi AP; d) geographical location and time/date validity ranges for the UOP entry.

In one embodiment of the invention, the ANDSF server also includes an UOP server (23), able to connect to the UOP repository, add new UOP entries, retrieve those belonging to/authorised for a specific user, or edit/delete existing ones. This UOP Server is also able to connect Network Management Elements (e.g. an AAA/HSS (24), i.e. Authentication, Authorisation and Accounting server (AAA) or a Home Subscriber Server (HSS) to manage the users' subscription and its right access to network resources and services) to authenticate and validate both users and Wi-Fi AP if necessary.

Figure 2 also includes a UOP client (31) as an enhancement of the standard ANDSF client to apply the credentials needed to the UOP Server and retrieve the UOP entries associated with this user, as well as triggering the Offload is the validity conditions are met. The UOP entries are retrieved by using the S14 interface defined in the ASDNF standard. Additionally, the S14 interface is also extended in order to verify the reachability of the Wi-Fi APs included in the UOP entries and not known yet by ANDSF Server. Lastly, the standard communication method uses by the S14 interface is accordingly extended to incorporate the pieces of information required by UOP entries.

The communication between the UOP Client and the UOP server builds upon the ANDSF standard, so the security levels and reliability of communication assured by this protocol are maintained.

All location information can be expressed as geographical coordinates, cellular cell ID or area ID, or WLAN location (HESSID, SSID or BSSID).

In the cases where a user or a Wi-Fi AP need to be validated, present invention provides embodiments with an interface from the UOP server to Authorisation, Authentication and Accounting (AAA) elements deployed in the core network of the Network Operator.

Over this architecture, five different main command flows are required for the entire process of one embodiment of the invention:
- Initialize flow. This flow associates the UE and the ANDSF server trough a 3GPP Network Access, validates user's credentials, retrieves the user's ANDSF policies and grants access to the UOP repository.
- UOP creation. In this flow a new Wi-Fi AP is included in the UOP repository. It requires that ANDSF is enabled in the UE, an open link to the ANDSF server through a 3GPP Network Access and the new Wi-Fi AP to be in UE's range.

- UOP Edition. It allows editing the information stored in a UOP entry. It requires that ANDSF is enabled in the UE and an open link to the ANDSF server through a 3GPP Network Access.
- UOP application. The UOP is transferred to the UE and there applied, likely triggering an offload. It requires that ANDSF is enabled in the UE, an open link to the ANDSF server through a 3GPP Network Access and the Wi-Fi AP to be in UE's range.
- UOP Sharing. The UOP is shared with another user/UE. It requires ANDF enabled in both UEs, open links from them to the ANDSF server through a 3GPP Network Access and the Wi-Fi AP to be in at least the invited UE's Range.

In the initialize flow, the UE has to follow the same process to identify and validate the access used by an ANDSF standard client (TLS session or HTTPS connection with login/password access). From the server point of view, the repository must be looked up in order to include the user's OUP (if existing) into the initial ANDSF policy configuration to be sent to the UOP client.

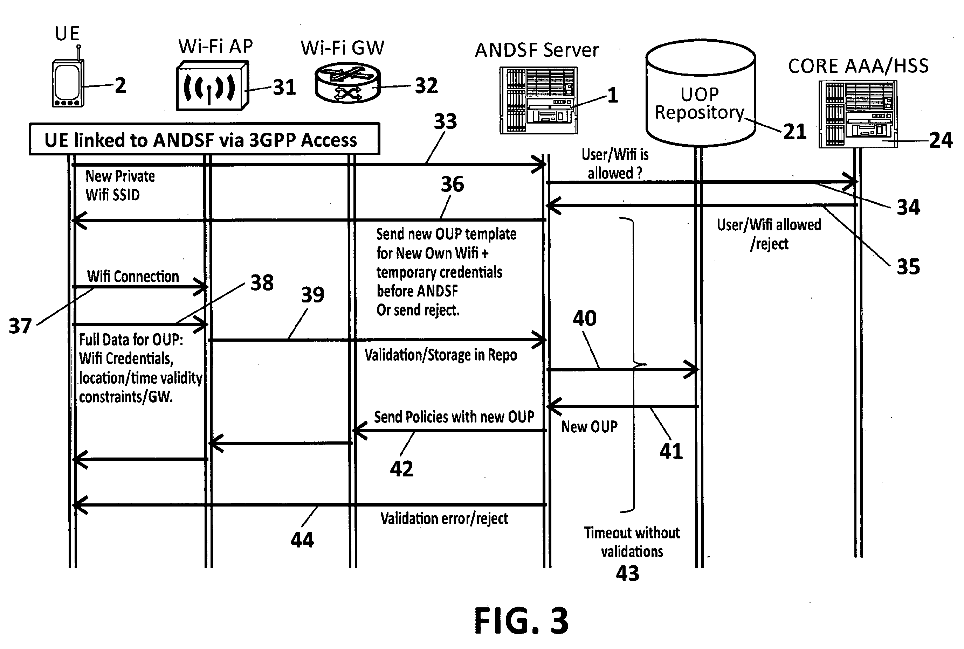

Figure 3 relates, according to one embodiment of the invention, to the flow for creating a new UOP entry for a user trusted Wi-Fi AP into the UOP repository and its main process. It starts with an UE (2) which has successfully completed an initialize process, so a communication link to the ANDSF server (1) via 3GPP network access is enabled. For the UOP creation and validation, it also requires the Wi-Fi AP (31) to be in UE's range, so an offloading operation could be completed. After the user has gathered the data related to the UOP, namely an identifier for the Wi-Fi AP (AP ID), UE location and Wi-Fi AP's credentials, if necessary, the UOP creation process starts by the UE sending (33) the new AP ID (only the AP ID) to the ANDSF server. The ANDSF checks (34) with the AAS/HSS (24) if the proposed Wi-Fi AP /user are allowed and/or they are associated somehow (to the Network Operator's knowledge).
This authentication process is an optional process, but for a global Network Operator, it can be useful to check first is the Wi-Fi AP is a registered/authorised/banned Wi-Fi AP connected to their fixed core network. Conversely, the ANDSF can incorporate an internal repository with information about trusted user/authorised Wi-Fi APs or not carry out any authentication (open Wi-Fi AP defined).
If the authentication check is ok (35), the ANDSF server builds a new temporary ANDSF policy to force an offloading through the suggested Wi-Fi AP with top priority and a short validity time, basically a timeout, and sends it to the UE (36), triggering the offloading to the Wi-Fi AP.
If the UE performs the offloading and the connection to the Wi-Fi AP is successful (37), the link with the ANDSF server is restarted but now through the Wi Fi AP. After having opened the new connection, the UE sends (38)(39) the remaining pieces of data required for completing the UOP creation and storage: Wifi AP's user credentials, Wi-Fi AP/UE location, time/hour validity ranges. Then, the ANDSF server inserts (40) this information into the UOP repository as a permanent UOP entry, the UOP entry is sent back (41) to the ANDSF server, which refreshes (42) the UE, through the Wi-Fi gateway (32), with the updated policies, including the validity data specified in the UOP entry, but not the credentials, thus removing the temporary timeout.
In the case the timeout expired (43) without the UE attempting the offloading (UE-ANDSF link not closed) or failed at it (UE-ANDSF link is not reopened) the new Wi-Fi AP and any associated UOP is discarded. If the link from the ANDSF to the UE through the 3GPP Network Access is still open a reject is sent (44) to force the UE to discard the temporary policies.

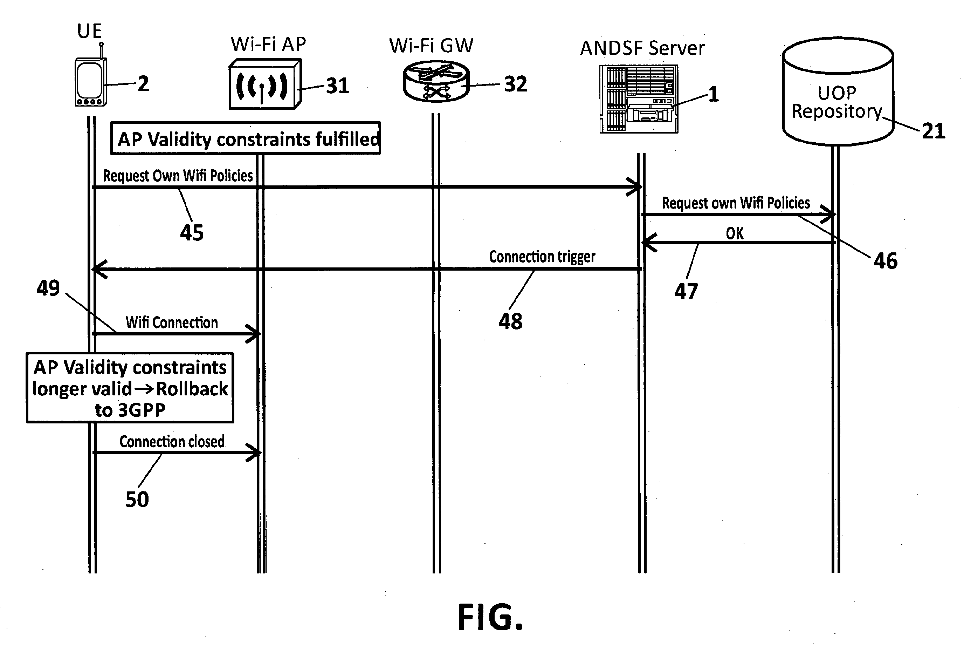

According to the ANDSF standard, anytime a UE connects to an ANDSF server, the server sends all the policies associated with the user subscription and the UE location. In order to cover either the transfer of credentials that would allow "seamless" connection with the proposed Wi-Fi AP or the retrieval of UOP policies, the flow is enhanced to allocate room for these pieces of information. Figure 4 illustrate the process of one embodiment of the invention, where the flow starts when a UE (2) has a UE-ANDSF server (1) link open through a 3GPP network access, a Wi-Fi AP (31) defined in the user's UOPs is in UE's range and the validity conditions (time/location) for the Wi-Fi AP in the UOP are fulfilled.

The UE requests (45) the ANDSF server to lookup (46) the Wi-Fi AP in the UOP repository (21) and, if found (47) there, to send (48) back both the "connection trigger (this access is placed at the top of the priority list) and the required access credentials, as well as any update in the UOP information since its creation. The UE then applies the UOP policy, performing (49) an offloading to the W-Fi AP.
When UOP validity constraints for that Wi-Fi AP are no longer valid, the UE rolls back (50) to 3GPP Network Access.

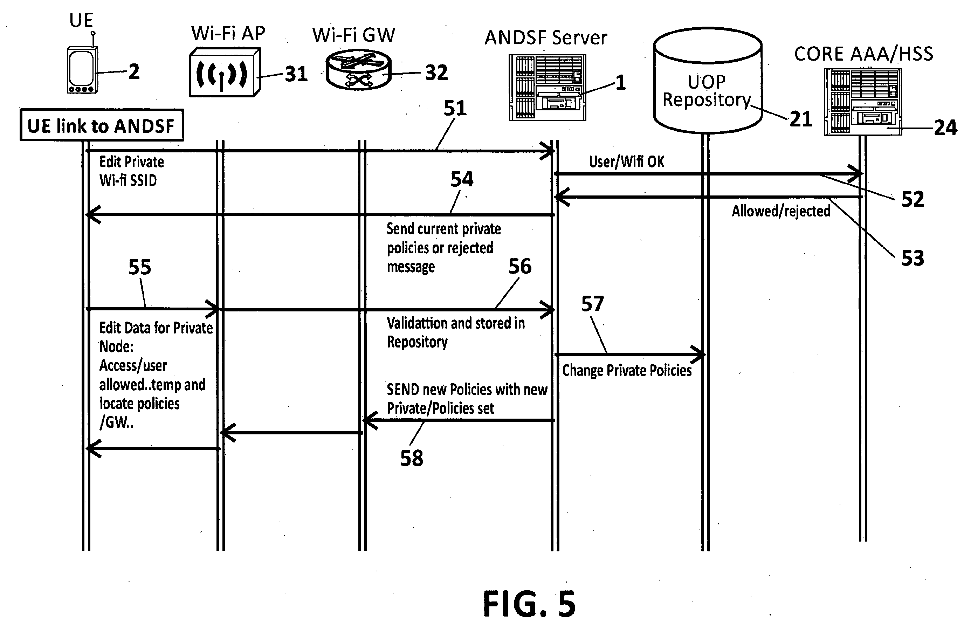

Figure 5 depicts the process to edit a UOP according to one embodiment of the invention. If a connection is open between the UE (2) and the ANDSF server (1), the flow process to make edits to a UOP stored in the UOP Repository (21) starts with a request (51) to the ANDSF server to edit the UOP Entry that stores a Wi-Fi AP (31) ID. It also requires the UE in the Wi-Fi AP's range to check the validity of the changes, i.e. the credentials to be used in the Wi-Fi AP connection.
After the ANDSF server checks (52)(53) with the AAA/HSS server (24) that the user and the Wi-Fi AP are both allowed, it sends (54) a message to the UE with the contents of the associated UOP entry.
The UE collects (55) the changes in UOP entry and sends (56) them to the UOP repository through the connection offloaded through the Wi-Fi AP. The ANDSF server validates and saves (57) the new UOP in the UOP repository and updates (58) the policies in UE.
If there were any errors during the process, the ANDSF server would send an error message.

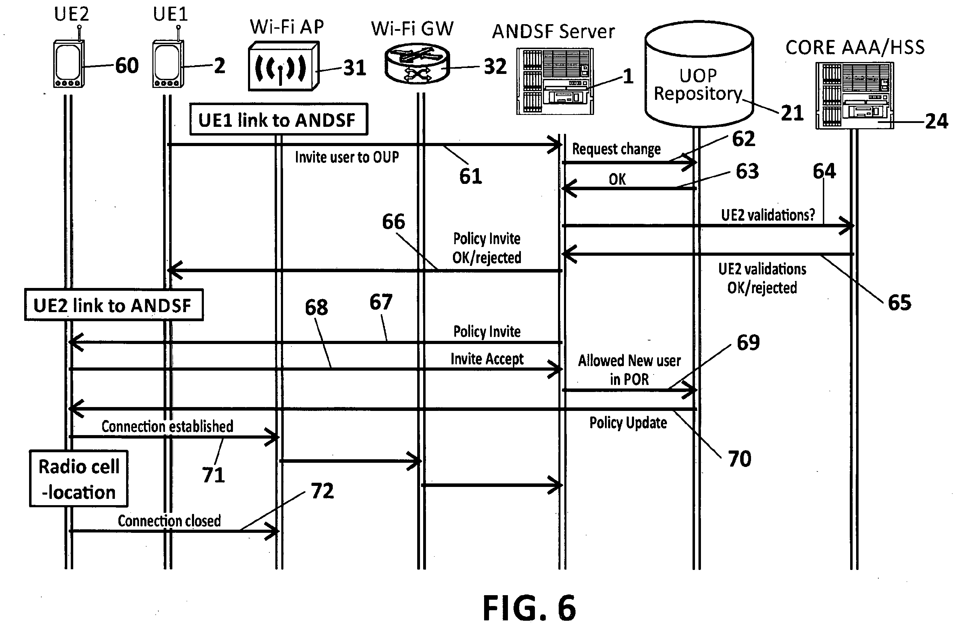

Figure 6 depicts the case of a UOP sharing. Two UEs are now involved, one with access permissions to an UOP entry in the UOP repository and a second one the first UE wishes to share the original UOP with.
The process is split in two main flows: one for the UOP owner (UE1 (2)) and a second one for the UE (UE2 (60)) invited to share the policy.
UE1 must be initially linked to the ANDSF server (1) and initiate (61) the process for granting UOP lookup rights over the entry to UE2. The ANDSF server should validate (62) (63) in the UOP repository (21) that the UE1 owns that entry and check (64)(65) that both UE2 and the Wi-Fi AP (31) are registered/authorised in the core AAA/HSS. If everything is Ok, the ANDSF server sends (66) to UE1 a "policy invite OK", reporting that the invitation process is about to be launched. If any part of this process fails, a user rejected message is sent to UE1.
After a successful UE2 validation in the Core AAA/HSS, the ANDSF server sends (67) to UE2 a messages "policy invite" for the UOP entry shared by UE1. If UE2 accepts (68) the invitation, the new user is added (69)(70) to UE1's UOP user list as a user with lookup rights for this UOP and a policy update is sent (70) to UE2. When the validity conditions established in the UOP are met (location or time policy) the UE can request to ANDSF server for the Wi-Fi AP access credentials in order to perform the offloading (71).

One particular embodiment of the invention covers the case of adding user's home Wi-Fi AP to ANDSF policies repository. According to this embodiment, the user adds a UOP entry for the user's home Wi-Fi AP and defines which other users (e.g. family members, friends) can look up and retrieve the UOP and offload their traffic to the home Wi-Fi AP. In addition, a Network Operator can check if this Wi-Fi AP is managed by their core system, so improved features can be made available on it, like access to subscriber services offered by this Network Operator.
In order to validate both the user and the Wi-Fi AP, the ANDSF node needs to verify that a valid connection between the Wi-Fi AP and the Core network exists, by means of a link to the ANDSF server opened via the Wi-Fi AP, and also to check user authentication and authorization with the operator systems, if necessary.
The UOP information can be refined by adding location information (so the offloading is only carried out when trusted UEs are really in the Wi-Fi AP's vicinity) and time constraints (so it is only valid when the user is expected to be at home). Assigning top priority to this Wi-Fi AP will force an automatic offload once the user reaches home, improving its QoE (greater Bandwidth) and helping reduce the load for the affected 3GPP cells in the area
By being aware of the Wi-Fi AP's connection to Core Network, the operator could apply specific user's policies on the Wi-Fi AP (i.e. subscriber services) and specific tariff/charging strategies.
Another advantage ensuing from this embodiment is the possibility to add new users as guests without need of explicitly telling them which Wi-Fi AP ID is or what credentials are needed, since these pieces of information are already stored in the cloud (in the UOP repository of the ANDSF server)

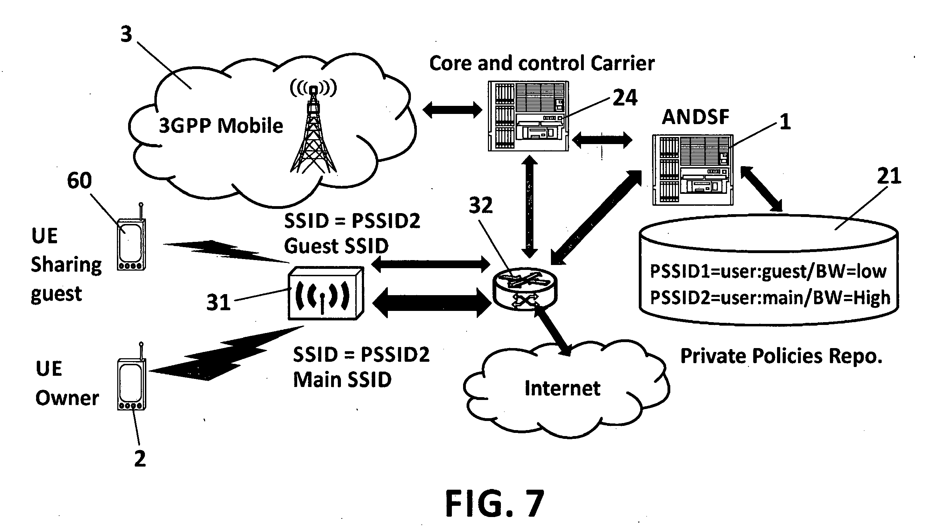

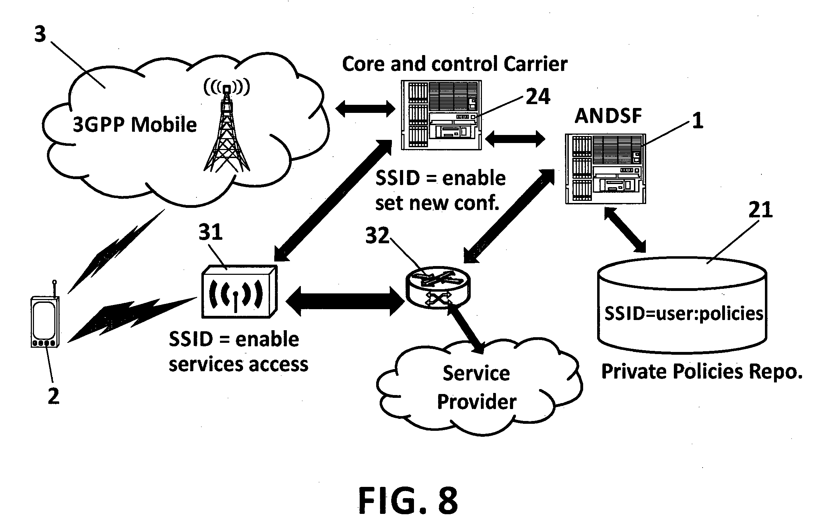

Figure 7 represents a particular embodiment of using Multi SSIDs capabilities to share surplus bandwidth.
According to this embodiment, a private Wi-Fi AP can be integrated into a group of shared public Wi-Fis, in case the Wi-Fi AP supports multiple SSID definitions. This embodiment also makes use of a connection from the Wi-Fi AP to a Network Operator's Wi-Fi Gateway which is capable of defining and scheduling specific features for each Wi-Fi node.
The Wi-Fi AP's owner has to configure it with 2 different identifiers (for example PSSID1 and PSSID2) and stores both Wi-Fi IDs into an ANDSF server as separate UOPs. In this case, by resorting to the Wi-Fi Gateway in the Core Network, separate network policies can be applied for each Wi-Fi ID, like desired QoS, Bandwidth ceiling, available operator services or network visibility. In figure 8, PSSID2 is the main access with bigger bandwidth and access privileges while PSSID1 is the surplus part with minimum bandwidth just for sharing purposes and without access to subscriber services and advanced network visibility.
To include the Wi-Fi AP into a shared environment, the owner only needs to define a UOP entry with the SSID and generic user/password to be used by the intended user group. So when a group member with ANDSF enabled in the UE is in the vicinity of the WiFi AP, it will receive all the required connection information (for example the SSID and credentials) and will automatically proceed to offload to the Wi-Fi AP.
In corporate environments, this embodiment has clear advantages, since the Wi-Fi AP manager can easily define guest invitations to a SSID with lower priority and fewer privileges than the main trunk for corporate access, so visitors can automatically use the offloading procedure inside the corporate coverage area for connecting to the guest Wi-Fi. The system Wi-Fi administrator, as UOP entry owner of those policies can easily invite visitors to the guest Wi-Fi, following the procedures defined in this invention.

Figure 8 represents a particular embodiment of the invention using ANDSF as Wi-Fi AP auto-configuration tool in a service environment.
According to this embodiment, where the normal procedure for defining a UOP entry involves the validation of the user (2) and the Wi-Fi AP (31) before the Network Operator, the ANDSF (1) alerts network elements (24) (e.g. HSS/PCRF) of a freshly installed Wi-Fi AP (31) existence and trigger an auto configuration process of that Wi-Fi AP, overriding the factory settings with operator settings according to the services subscribed/enabled for the Wi-Fi AP location.
There is a basic advantage ensuing from this procedure: It does not require the intervention of the network support team, either remotely or in the user's home. Simply the validations carried out by the ANDSF are enough to find out the user's subscription details and apply them as required.

This document often uses the terms "user" and "user equipment" with no distinction, since the user equipment (UE) is understood as any device used directly by the user to communicate. It can be a mobile phone, smartphone, a laptop computer equipped with a mobile_broadband adapter, or any other similar device.

## Claims

1. Method for managing, by a user, a network access user policy (UOP) associated to a user equipment (UE1) for offloading data traffic, using Access Network Discovery and Selection Function (ANDSF), wherein one or more Wi-Fi access points are available for the UE1, being the UE1 in communication with a server through a mobile communications network, the method is **characterized by** comprising the following steps:
a) sending, from the UE1 (2) to the server (1, 23), through the mobile communications network, a first message (33) containing an identifier of an available Wi-Fi access point (31);
b) the server receiving the first message and sending a second message (36) to the UE1 requiring a trial offloading through the Wi-Fi access point;
c) if the trial offloading is successful, the UE1 sending, using the Wi-Fi access point, a third message (38,39) containing certain parameters to the server for setting a UOP;
d) the server setting a UOP for offloading traffic according to the certain parameters;
e) the server storing (40) the UOP in a UOP repository;
f) the server sending a fourth message (42) containing the UOP to the UE1.
g) the user of UE1 managing the UOP taking at least one of the following actions: applying the UOP, editing the UOP, deleting the UOP, or distributing the UOP.

2. Method according to claim 1 wherein editing the UOP further comprising:
- sending a request message, from the UE1 to the server, containing a request to edit the UOP;
- the server receiving the edition message and sending to the UE1 another message containing the UOP;
- editing one or more parameters of the UOP in the UE1;
- sending an edition message containing the edited UOP from the UE1 to the server;
- the server storing the edited UOP in the UOP repository;
- the server sending an updating message containing the edited UOP to the UE1.

3. Method according to any one of the previous claims, wherein applying the UOP through a determined Wi-Fi access point, further comprising:
- the UE1 sending a request message to the server containing an identifier of the determined Wi-Fi access point;
- searching, by the server, in the UOP repository for a UOP associated to the identifier;
- if the UOP is found, sending a connection message from the server to the UE1 containing at least the UOP;
- the UE1 connecting to the Wi-Fi access point and offloading content according to the UOP.

4. Method according to any one of the previous claims wherein distributing the UOP to a second user equipment (UE2) further comprising:
- sending a first invitation message, from the UE1 to the server, containing an identifier of the UE2 and indicating the UOP to be shared;
- the server sending a second invitation message to the UE2 for the UOP shared by UE1;
- the UE2 accepting the invitation for sharing the UOP;
- adding the UE2 to the UOP as an authorized user;
- the server storing the UOP in the UOP repository;
- the server sending an updating message containing the UOP to the UE2.

5. Method according to any of the previous claims further comprising an authorization step, wherein the server sending to a network management element an authorization message containing at least one of: {the identifier of the Wi-Fi access point, a identifier of the user }, to check whether they are allowed/registered/authorized.

6. Method according to any of previous claims wherein a Wi-Fi access point requires certain credentials, further comprising the UE1 providing said credentials as a parameter to include in the UOP associated.

7. Method according to any of the previous claims wherein a UOP comprises information from the following list: list of users allowed to access and manage the UOP, credentials to be used for accessing the UOP, type of operation allowed for each user, identifier of a WI-Fi access point, credentials required to connect to the WI-Fi access point, geographical location and time/date ranges defining a validity for the UOP.

8. Method according to any of the previous claims wherein the identifier of the Wi-Fi access point in the UOP is SSID, a HESSID or a BSSID.

9. Method according to any of the previous claims wherein a Wi-Fi access points supporting more than one identifier, further comprising setting one UOP for each identifier of the Wi-Fi access point with one or more parameters from the following list: desired QoS, bandwidth ceiling, available operator services, network visibility.

10. System for managing, by a user, a network access user policy (UOP) associated to a user equipment (UE1) for offloading data traffic, using Access Network Discovery and Selection Function (ANDSF), wherein one or more Wi-Fi access points are available for the UE1, being the UE1 in communication with a server through a mobile communications network, the system is **characterized by** comprising:
- the UE1 configured for: sending, through the mobile communications network, messages containing identifiers of available Wi-Fi access points; sending, using the Wi-Fi access point, messages containing certain parameters to the server for managing UOPs taking at least one of the following actions: applying the UOP, editing the UOP, deleting the UOP, or distributing the UOP
- a server configured for: receiving messages from the UE1 and sending messages to the UE1 requiring a trial offloading through Wi-Fi access points; applying, editing, deleting and distributing UOPs for offloading traffic according to the certain parameters; and sending messages containing UOPs to the UE1;
- an UOP repository in communication with the server for storing UOPs.

11. System according to claim 10 wherein:
- the UE1 is further configured for: sending a request message to the server, containing a request to edit the UOP; editing one or more parameters of the UOP; and sending an edition message containing the edited UOP to the server;
- and the server is further configured for: receiving edition messages and sending to the UE1 messages containing UOPs; and sending updating messages containing edited UOPs to the UE1.

12. System according to any one of previous claims 10,11 wherein:
- the UE1 is further configured for: sending a request message to the server containing an identifier of the determined Wi-Fi access point; and connecting to the Wi-Fi access point for offloading content through the Wi-Fi access point according to the UOP;
- the server is further configured for: searching in the UOP repository for a UOP associated to the identifier; and sending connection messages to the UE1 containing at least the UOP.

13. System according to any one of previous claims 10,12 further comprising a second user equipment (UE2) configured for accepting invitations for sharing UOPs and wherein:
- the UE1 is further configured for: sending invitation messages to the server, containing an identifier of the UE2 and indicating the UOP to be shared
- the server is further configured for: sending invitation messages to the UE2 for UOPs shared by UE1; adding the UE2 to the UOP as an authorized user; and sending updating messages containing UOPs to the UE2;

14. System according to any one of previous claims 10,13 wherein the server is further configured for sending to a core network an authorization message containing at least one of: {the identifier of the Wi-Fi access point, a identifier of the user equipment}, further comprising an authorization server in the core network, in communication with the server, configured for checking whether the Wi-Fi access point and the user equipment are allowed/registered/authorized.

15. A computer program product comprising computer program code adapted to perform the method according to any of the claims 1-9 when said program code is executed on a computer, a digital signal processor, a field-programmable gate array, an application-specific integrated circuit, a micro-processor, a micro-controller, or any other form of programmable hardware.

## Patentansprüche

1. Verfahren zum Verwalten einer Netzwerkzugriffbenutzerrichtlinie (UOP), die einer Benutzereinrichtung (UE1) zugeordnet ist, zum Umladen von Datenverkehr unter Verwendung von Access Network Discovery and Selection Function (ANDSF), durch einen Benutzer, wobei ein oder mehrere Wi-Fi-Zugriffspunkte für die UE1 verfügbar sind, die UE1 über ein Mobilkommunikationsnetzwerk mit einem Server in Kommunikation steht, wobei das Verfahren **dadurch gekennzeichnet ist, dass** dasselbe die folgenden Schritte aufweist:
a) Senden einer ersten Nachricht (33), die einen Identifizierer eines verfügbaren Wi-Fi-Zugriffspunkts (31) enthält, von der UE1 (2) an den Server (1, 23) über das Mobilkommunikationsnetzwerk;
b) Empfangen der ersten Nachricht und Senden einer zweiten Nachricht (36) an die UE1 durch den Server, wobei ein versuchsweises Umladen über den Wi-Fi-Zugriffspunkt erforderlich ist;
c) falls das versuchsweise Umladen erfolgreich ist, Senden einer dritten Nachricht (38, 39), die bestimmte Parameter enthält, an den Server durch die UE1 unter Verwendung des Wi-Fi-Zugriffspunkts zum Festlegen einer UOP;
d) Festlegen einer UOP zum Umladen von Verkehr gemäß den bestimmten Parametern, durch den Server;
e) Speichern (40) der UOP in einem UOP-Repository durch den Server;
f) Senden einer vierten Nachricht (42), die die UOP enthält, an die UE1 durch den Server;
g) Verwalten der UOP durch den Benutzer von UE1, wobei zumindest eine der folgenden Aktionen durchgeführt wird: Anwenden der UOP, Bearbeiten der UOP, Löschen der UOP oder Verteilen der UOP.

2. Verfahren gemäß Anspruch 1, wobei das Bearbeiten der UOP ferner folgende Schritte aufweist:
- Senden einer Anforderungsnachricht, die eine Anforderung zum Bearbeiten der UOP enthält, von der UE1 an den Server;
- Empfangen der Bearbeitungsnachricht und Senden einer weiteren Nachricht, die die UOP enthält, an die UE1 durch den Server;
- Bearbeiten eines oder mehrerer Parameter der UOP in der UE1;
- Senden einer Bearbeitungsnachricht, die die bearbeitete UOP enthält, von der UE1 an den Server;
- Speichern der bearbeiteten UOP in dem UOP-Repository durch den Server;
- Senden einer Aktualisierungsnachricht, die die bearbeitete UOP enthält, an die UE1 durch den Server.

3. Verfahren gemäß einem der vorhergehenden Ansprüche, bei dem das Anwenden der UOP über einen festgelegten Wi-Fi-Zugriffspunkt ferner folgende Schritte aufweist:
- Senden einer Anforderungsnachricht, die einen Identifizierer des festgelegten Wi-Fi-Zugriffspunkts enthält, an den Server durch die UE1;
- Suchen in dem UOP-Repository nach einer UOP, die dem Identifizierer zugeordnet ist, durch den Server;
- falls die UOP gefunden wird, Senden einer Verbindungsnachricht, die zumindest die UOP enthält, von dem Server an die UE1;
- Verbinden mit dem Wi-Fi-Zugriffspunkt und Umladen von Inhalt gemäß der UOP durch die UE1.

4. Verfahren gemäß einem der vorhergehenden Ansprüche, bei dem das Verteilen der UOP an eine zweite Benutzereinrichtung (UE2) ferner folgende Schritte aufweist:
- Senden einer ersten Einladungsnachricht, die einen Identifizierer der UE2 enthält und die gemeinschaftlich zu verwendende UOP angibt, von der UE1 an den Server;
- Senden einer zweiten Einladungsnachricht zu der UOP, die durch UE1 gemeinschaftlich verwendet wird, an die UE2 durch den Server;
- Akzeptieren der Einladung zum gemeinschaftlichen Verwenden der UOP durch die UE2;
- Hinzufügen der UE2 zu der UOP als autorisierten Benutzer;
- Speichern der UOP in dem UOP-Repository durch den Server;
- Senden einer Aktualisierungsnachricht, die die UOP enthält, an die UE2 durch den Server.

5. Verfahren gemäß einem der vorhergehenden Ansprüche, das ferner einen Autorisierungsschritt aufweist, bei dem der Server eine Autorisierungsnachricht, die zumindest einen der folgenden enthält: {den Identifizierer des Wi-Fi-Zugriffspunkts, einen Identifizierer des Benutzers}, an ein Netzwerkverwaltungselement sendet, um zu prüfen, ob dieselben erlaubt/registriert/autorisiert sind.

6. Verfahren gemäß einem der vorhergehenden Ansprüche, bei dem ein Wi-Fi-Zugriffspunkt bestimmte Berechtigungsnachweise erfordert, das ferner ein Bereitstellen der Berechtigungsnachweise durch die UE1 als einen Parameter, der in die zugeordnete UOP aufzunehmen ist, aufweist.

7. Verfahren gemäß einem der vorhergehenden Ansprüche, bei dem eine UOP Informationen aus der folgenden Liste aufweist: Liste der Benutzer, denen es erlaubt ist, auf die UOP zuzugreifen und dieselbe zu verwalten, Berechtigungsnachweise, die zum Zugreifen auf die UOP zu verwenden sind, Vorgangsart, die für jeden Benutzer erlaubt ist, Identifizierer eines Wi-Fi-Zugriffspunkts, Berechtigungsnachweise, die erforderlich sind, um eine Verbindung mit dem Wi-Fi-Zugriffspunkt herzustellen, geografischer Standort und Zeit-/Datumsbereiche, die eine Gültigkeit für die UOP definieren.

8. Verfahren gemäß einem der vorhergehenden Ansprüche, bei dem der Identifizierer des Wi-Fi-Zugriffspunkts in der UOP SSID, eine HESSID oder eine BSSID ist.

9. Verfahren gemäß einem der vorhergehenden Ansprüche, bei dem ein Wi-Fi-Zugriffspunkt mehr als einen Identifizierer unterstützt, das ferner ein Festlegen einer UOP für jeden Identifizierer des Wi-Fi-Zugriffspunkts mit einem oder mehreren Parametern aus der folgenden Liste aufweist: gewünschte QoS, Bandbreitenobergrenze, verfügbare Betreiberdienste, Netzwerksichtbarkeit.

10. System zum Verwalten einer Netzwerkzugriffsbenutzerrichtlinie (UOP), die einer Benutzereinrichtung (UE1) zugeordnet ist, zum Umladen von Datenverkehr unter Verwendung von Access Network and Selection Function (ANDSF), durch einen Benutzer, wobei ein oder mehrere Wi-Fi-Zugriffspunkte für die UE1 verfügbar sind, die UE1 über ein Mobilkommunikationsnetzwerk mit einem Server in Kommunikation steht, wobei das System **dadurch gekennzeichnet ist, dass** es die folgenden Merkmale aufweist:
- die UE1, die konfiguriert ist zum: Senden von Nachrichten, die Identifizierer von verfügbaren Wi-Fi-Zugriffspunkten enthalten, über das Mobilkommunikationsnetzwerk; unter Verwendung des Wi-Fi-Zugriffspunkts an den Server, Senden von Nachrichten, die bestimmte Parameter enthalten, zum Verwalten von UOPs, wobei zumindest eine der folgenden Aktionen durchgeführt wird: Anwenden der UOP, Bearbeiten der UOP, Löschen der UOP oder Verteilen der UOP;
- einen Server, der konfiguriert ist zum: Empfangen von Nachrichten von der UE1 und Senden von Nachrichten an die UE1, wobei ein versuchsweises Umladen durch Wi-Fi-Zugriffspunkte erforderlich ist; Anwenden, Bearbeiten, Löschen und Verteilen von UOPs zum Umladen von Verkehr gemäß bestimmten Parametern; und Senden von Nachrichten, die UOPs enthalten, an die UE1;
- ein UOP-Repository, das mit dem Server in Kommunikation steht, zum Speichern von UOPs.

11. System gemäß Anspruch 10, bei dem:
- die UE1 ferner konfiguriert ist zum: Senden einer Anforderungsnachricht, die eine Anforderung zum Bearbeiten der UOP enthält, an den Server; Bearbeiten eines oder mehrerer Parameter der UOP; und Senden einer Bearbeitungsnachricht, die die bearbeitete UOP enthält, an den Server;
- und der Server ferner konfiguriert ist zum: Empfangen von Bearbeitungsnachrichten und Senden von Nachrichten, die UOPs enthalten, an die UE1; und Senden von Aktualisierungsnachrichten, die bearbeitete UOPs enthalten, an die UE1.

12. System gemäß einem der vorhergehenden Ansprüche 10, 11, bei dem:
- die UE1 ferner konfiguriert ist zum: Senden einer Anforderungsnachricht, die einen Identifizierer des festgelegten Wi-Fi-Zugriffspunkts enthält, an den Server; und Verbinden mit dem Wi-Fi-Zugriffspunkt zum Umladen von Inhalt durch den Wi-Fi-Zugriffspunkt gemäß der UOP;
- der Server ferner konfiguriert ist zum: Suchen in dem UOP-Repository nach einer UOP, die dem Identifizierer zugeordnet ist; und Senden von Verbindungsnachrichten, die zumindest die UOP enthalten, an die UE1.

13. System gemäß einem der vorhergehenden Ansprüche 10, 12, das ferner eine zweite Benutzereinrichtung (UE2) aufweist, die zum Akzeptieren von Einladungen zum gemeinschaftlichen Verwenden von UOPs konfiguriert ist, und bei dem:
- die UE1 ferner konfiguriert ist zum: Senden von Einladungsnachrichten, die einen Identifizierer der UE2 enthalten und die gemeinschaftlich zu verwendende UOP angeben, an den Server;
- der Server ferner konfiguriert ist zum: Senden von Einladungsnachrichten zu UOPs, die durch UE1 gemeinschaftlich verwendet werden, an die UE2; Hinzufügen der UE2 zu der UOP als autorisierten Benutzer; und Senden von Aktualisierungsnachrichten, die UOPs enthalten, an die UE2.

14. System gemäß einem der vorhergehenden Ansprüche 10, 13, bei dem der Server ferner konfiguriert ist zum: Senden einer Autorisierungsnachricht, die zumindest einen der Folgenden enthält: {den Identifizierer des Wi-Fi-Zugriffspunkts, einen Identifizierer der Benutzereinrichtung}, an ein Kernnetzwerk, wobei dasselbe ferner einen Autorisierungsserver in dem Kernnetzwerk aufweist, der in Kommunikation mit dem Server steht und konfiguriert ist zu prüfen, ob der Wi-Fi-Zugriffspunkt und die Benutzereinrichtung erlaubt/registriert/autorisiert sind.

15. Ein Computerprogrammprodukt, das einen Computerprogrammcode aufweist, der angepasst ist, das Verfahren gemäß einem der Ansprüche 1 bis 9 durchzuführen, wenn der Programmcode auf einem Computer, einem digitalen Signalprozessor, einem feldprogrammierbares Gatterarray, einer applikationsspezifischen integrierten Schaltung, einem Mikroprozessor, einem Mikrocontroller oder einer beliebigen anderen Form von programmierbarer Hardware ausgeführt wird.

## Revendications

1. Un procédé pour la gestion, par un utilisateur, d'une politique d'accès d'utilisateur au réseau (UOP) associée à un équipement d'utilisateur (UE1) pour décharger du trafic de données, en utilisant une fonction sélection et découverte de réseau d'accès (ANDSF), dans lequel un ou plusieurs points d'accès Wi-Fi sont à disposition pour le UE1, le UE1 étant en communication avec un serveur à travers un réseau de communication mobile, le procédé étant **caractérisé en ce qu'**il comprend les étapes suivantes :
a) Envoyer, depuis le UE1 (2) au serveur (1, 23), à travers le réseau de communication mobile, un premier message (33) contenant un identifiant d'un point d'accès Wi-Fi (31) disponible ;
b) Le serveur recevant le premier message et envoyant un deuxième message (36) à l'UE1 requérant une décharge d'essai à travers le point d'accès Wi-Fi ;
c) Si la décharge d'essai est une réussite, le UE1 envoyant, en utilisant le point d'accès Wi-Fi, un troisième message (38, 39) contenant certains paramètres, au serveur pour fixer une UOP ;
d) Le serveur fixant une UOP pour décharger du trafic selon les certains paramètres ;
e) Le serveur stockant (40) la UOP dans un dépôt à UOP ;
f) Le serveur envoyant un quatrième message (42) contenant la UOP à l'UE1
g) L'utilisateur du UE1 gérant la UOP prenant au moins une des démarches suivantes :
appliquer la UOP, éditer la UOP, supprimer la UOP, ou distribuer la UOP.

2. Le procédé selon la revendication 1, dans lequel l'édition de la UOP comprend d'avantage :
- Envoyer un message requête, depuis le UE1 au serveur, contenant une requête pour éditer la UOP ;
- Le serveur recevant le message d'édition et envoyant au UE1 un autre message contenant la UOP ;
- Éditer un ou plusieurs paramètres de la UOP dans le UE1 ;
- Envoyer un message d'édition contenant la UOP éditée depuis le UE1 au serveur ;
- Le serveur stockant la UOP éditée dans le dépôt à UOP ;
- Le serveur envoyant un message d'actualisation contenant la UOP éditée au UE1.

3. Le procédé selon l'une quelconque des revendications précédentes, dans lequel l'application de la UOP à travers un point d'accès Wi-Fi déterminé, comprenant d'avantage :
- Le UE1 envoyant un message requête au serveur contenant un identifiant du point d'accès Wi-Fi déterminé ;
- Recherche, par le serveur, dans le dépôt à UOP pour une UOP associée à l'identifiant ;
- Si la UOP est trouvée, envoyer un message de connexion depuis le serveur au UE1 contenant au moins la UOP ;
- Le UE1 connectant au point d'accès Wi-Fi et déchargeant du contenu selon la UOP.

4. Le procédé selon l'une quelconque des revendications précédentes, dans lequel la distribution de la UOP à un deuxième équipement d'utilisateur (UE2) comprend d'avantage :
- Envoyer un premier message d'invitation, depuis le UE1 au serveur, contenant un identifiant du UE2 et indiquant la UOP destinée à être partagée ;
- Le serveur envoyant un deuxième message d'invitation à l'UE2 pour l'UOP partagée par l'UE1 ;
- L'UE2 acceptant l'invitation pour partager l'UOP ;
- Ajouter le UE2 à la UOP entant que utilisateur autorisé ;
- Le serveur stockant l'UOP dans le dépôt à UOP ;
- Le serveur envoyant un message d'actualisation contenant l'UOP à l'UE2.

5. Le procédé selon l'une quelconque des revendications précédentes, comprenant d'avantage une étape d'autorisation, dans lequel le serveur envoyant à un élément de gestion de réseau un message d'autorisation contenant au moins un de : {l'identifiant du point d'accès Wi-Fi, un identifiant de l'utilisateur}, pour vérifier s'ils sont permis/registrés/autorisés.

6. Le procédé selon l'une quelconque des revendications précédentes, dans lequel un point d'accès Wi-Fi requiert certaines références, comprenant d'avantage le UE1 fournissant lesdites références comme un paramètre à être inclus dans l'UOP associée.

7. Le procédé selon l'une quelconque des revendications précédentes, dans lequel une UOP comprend de l'information de la liste suivante : liste des utilisateurs permis d'accéder à l'UOP et de gérer l'UOP, références destinées à être utilisées pour accéder à la UOP, type d'opération permise pour chaque utilisateur, identifiant d'un point d'accès Wi-Fi, références requises pour connecter au point d'accès Wi-Fi, situation géographique et domaine de temps/date définissant une validité pour la UOP.

8. Le procédé selon l'une quelconque des revendications précédentes, dans lequel l'identifiant du point d'accès Wi-Fi dans la UOP est SSID, HESSID ou un BSSID.

9. Le procédé selon l'une quelconque des revendications précédentes, dans lequel un point d'accès Wi-Fi supportant plus d'un identifiant, comprenant d'avantage fixer une UOP pour chaque identifiant du point d'accès Wi-Fi avec un ou plusieurs paramètres de la liste suivante : QoS désiré, plafond de bande passante, service d'opérateur disponible, visibilité de réseau.

10. Un système pour la gestion, par un utilisateur, d'une politique d'accès d'utilisateur au réseau (UOP) associée à un équipement d'utilisateur (UE1) pour décharger du trafic de données, en utilisant une fonction sélection et découverte de réseau d'accès (ANDSF), dans lequel un ou plusieurs points d'accès Wi-Fi sont à disposition pour le UE1, le UE1 étant en communication avec un serveur à travers un réseau de communication mobile, le système étant **caractérisé en ce qu'**il comprend :
- Le UE1 configuré pour : envoyer, à travers un réseau de communications mobile, des messages contenant des identifiants de points d'accès Wi-Fi disponibles, envoyer, en utilisant le point d'accès Wi-Fi, des messages contenant certains paramètres au serveur pour gérer des UOP prenant au moins une des démarche suivantes : appliquer la UOP, éditer la UOP, supprimer la UOP, ou distribuer la UOP
- Un serveur configuré pour : recevoir des messages depuis le UE1 et envoyer des messages au UE1 requérant une décharge d'essai à travers les points d'accès Wi-Fi ; appliquer, éditer, supprimer et distribuer des UOP pour décharger du trafic selon les certains paramètres; et envoyer des messages contenant des UOP au UE1 ;
- Un dépôt à UOP en communication avec le serveur pour stocker des UOP.

11. Système selon la revendication 10, dans lequel :
- Le UE1 est d'avantage configuré pour : envoyer des messages requête à un serveur, contenant une requête pour éditer la UOP ; éditer un ou plusieurs paramètres de la UOP ; et envoyer un message d'édition contenant la UOP éditée au serveur ;
- Et le serveur est d'avantage configuré pour : recevoir des messages d'édition et envoyer au UE1 des messages contenant des UOP ; et envoyer des messages d'actualisation contenant des UOP éditées au UE1.

12. Le système selon l'une quelconque des revendications 10, 11, dans lequel :
- Le UE1 est d'avantage configuré pour envoyer un message requête au serveur contenant un identifiant du point d'accès Wi-Fi déterminé ; et connecter au point d'accès Wi-Fi pour décharger du contenu à travers le point d'accès Wi-Fi selon la UOP ;
- Le serveur est d'avantage configuré pour : chercher dans le dépôt à UOP pour une UOP associée à l'identifiant ; et envoyer des messages de connexion au UE1 contenant au moins la UOP.

13. Le système selon l'une quelconque des revendications 10, 12 comprenant d'avantage un deuxième équipement d'utilisateur (UE2) configuré pour accepter des invitations pour partager des UOP et dans lequel :
- Le UE1 est configuré d'avantage pour : envoyer des messages d'invitation au serveur, contenant un identifiant du UE2 et indiquant la UOP destinée à être partagée
- Le serveur est configuré d'avantage pour : envoyer des messages d'invitation au UE2 pour des UOP partagées par l'UE1 ; ajouter le UE2 à la UOP en tant qu'utilisateur autorisé ;
- Et envoyer des messages d'actualisation contenant des UOP au UE2 ;

14. Le système selon l'une quelconque des revendications précédentes 10, 13 dans lequel le serveur est configuré d'avantage pour envoyer à un réseau central un message d'autorisation contenant au moins un de : {l'identifiant du point d'accès Wi-Fi, un identifiant de l'équipement d'utilisateur}, comprenant d'avantage un serveur d'autorisation dans le réseau central, en communication avec le serveur, configuré pour vérifier si le point d'accès Wi-Fi et l'équipement d'utilisateur sont permis/registrés/autorisés.

15. Un produit de programme informatique comprenant du code de programme informatique adapté pour effectuer le procédé selon l'une quelconque des revendications 1 à 9, quand ledit code de programme est exécuté sur un ordinateur, un processeur à signaux numériques, sur un pré-diffusé programmable, un circuit intégré spécifique à une application, un microprocesseur, un microcontrôleur, ou quelconque autre forme de matériel programmable.
